# EUROPEAN PATENT APPLICATION

(11) **EP 2 426 747 A1**
(43) Date of publication of application: **07.03.2012**
(21) Application number: 10789272.1
(22) Date of filing: 17.02.2010
(51) Int. Cl.: H01L 33/60, F21S 2/00, F21V 5/00, F21V 5/04, F21V 7/00, F21V 7/22, G02F 1/13357, H04N 5/66

(54) **LIGHT EMITTING MODULE, ILLUMINATING DEVICE, DISPLAY DEVICE, AND TELEVISION RECEIVER**

(30) Priority: 15.06.2009 JP 2009141744
(71) Applicant: Sharp Kabushiki Kaisha, Osaka-shi, Osaka 545-8522 (JP)
(72) Inventor: YOKOTA, Masashi, Osaka-shi, Osaka 545-8522 (NL)
(74) Representative: Müller-Boré & Partner Patentanwälte
(86) International application number: PCT/JP2010/052314
(87) International publication number: WO 2010/146894

(57) **Abstract**

The backlight unit (49) of a display device (69) having a liquid crystal display panel (59) is provided with a chassis (41), a diffuser plate (43) supported by means of the chassis, and a light source which irradiates the diffuser plate (43) with light. In the light source, a plurality of light emitting modules (MJ), each of which includes an LED (22), a diffusing lens (24) covering the LED, and a built-in reflecting sheet (11) disposed between a mounting substrate (21) and the diffusing lens, are disposed in matrix on the chassis which supports the diffuser plate. The built-in reflecting sheet has a light reflection ratio higher than that of the mounting substrate.

## Description

### Technical Field

The present invention relates to light emitting modules, illuminating devices that use light from a light emitting module, display devices that include an illuminating device, and television receivers that are provided with a display device.

### Background Art

A display device employing a non-luminous display panel, such as a liquid crystal display panel, is commonly combined with an illuminating device which illuminates the display panel from behind. As a light source in this type of illuminating device, many types are used, such as cold cathode fluorescent tubes and light emitting devices. Light emitting devices are exemplified by light emitting diodes (hereinafter "LEDs"). Patent Document 1 listed below discloses an illuminating device which adopts an LED as a light source.

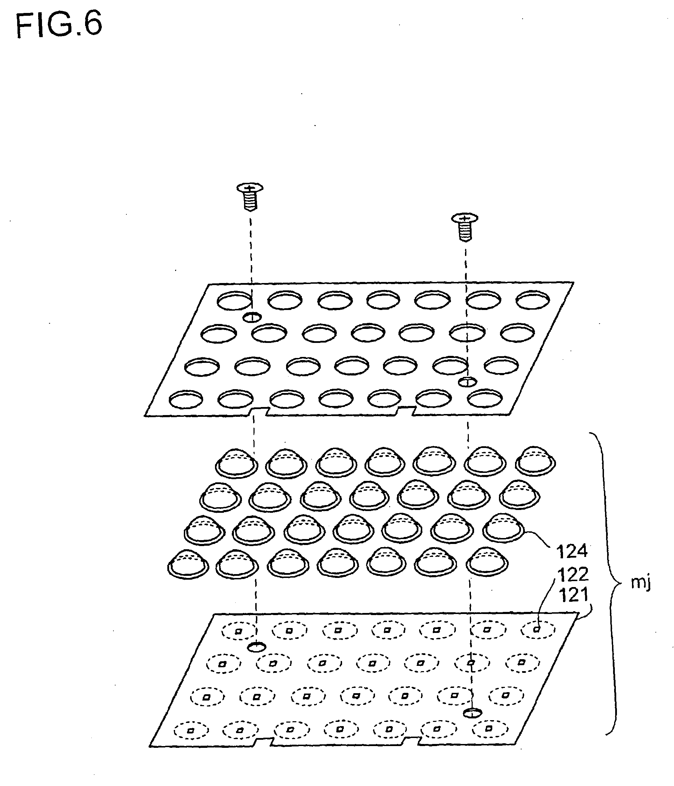

In the illuminating device disclosed in Patent Document 1, as shown in Fig. 6, LEDs 122 are mounted on a mounting board 121, and in addition lenses 124 covering the LEDs 122 are fitted to the mounting board 121. The mounting board 121, the LEDs 122, and the lenses 124 together constitute a light emitting module mj. The lenses 124 have the shape of a hemispherical dome with uniform thickness, and transmit, without much refracting, the light emitted from the LEDs 122. Accordingly, with the LEDs 122 pointing upward as in Fig. 6, a large proportion of the light travels in directions close to the plumb-vertical direction.

### List of Citations

### Patent Literature

Patent Document 1: JP-A-2008-41546

### Summary of Invention

### Technical Problem

The illuminating device disclosed in Patent Document 1 is designed on the principle of using as many LEDs as will provide the desired amount of light. To obtain the desired amount of light with less LEDs, the amount of light emerging from the lenses needs to be increased. It will be ideal if this can be achieved without relying on increasing the amount of light emitted by individual LEDs.

The present invention has been made against the background discussed above, and aims to provide a light emitting module that can increase the amount of light emerging from a lens without relying on increasing the amount of light emitted by a light emitting device.

### Solution to Problem

According to a preferred embodiment of the invention, in a light emitting module including a mounting board, a light emitting device mounted on the mounting board, and a lens covering the light emitting device, between the mounting board and the lens, a built-in reflective sheet is arranged which has higher light reflectance than the mounting board.

With this structure, the light reflected at the interface between the lens and the air surrounding it so as to return toward the mounting board is once again reflected efficiently on the built-in reflective sheet with high reflectance so as to rejoin the light emerging from the lens. This increases the amount of light emerging from the lens.

According to another preferred embodiment of the invention, in the light emitting module structured as described above, the built-in reflective sheet has a reflectance of 95% or more.

With this structure, the light reflected at the interface between the lens and the air surrounding it so as to return toward the mounting board is once again reflected efficiently.

According to another preferred embodiment of the invention, in the light emitting module structured as described above, the built-in reflective sheet is formed of a sheet of foamed resin that reflects light by bubble interface reflection inside the resin.

With this structure, a reflectance as high as 98% can be obtained. Moreover, unlike paint and the like, less likelihood of deterioration with time helps maintain high reflectance for a long period.

According to another preferred embodiment of the invention, in the light emitting module structured as described above, the lens is a diffusive lens.

With this structure, the light emitted from the light emitting device has a large spread, and this permits a large area to be illuminated satisfactorily with a comparatively small number of light emitting devices.

According to another preferred embodiment of the invention, in the light emitting module structured as described above, the light emitting device is an LED.

With this structure, by use of LEDs developed with remarkably ever higher luminance in recent years, a bright light emitting module can be obtained.

According to another preferred embodiment of the invention, an illuminating device is built which uses light from the light emitting module structured as described above.

With this construction, an illuminating device is obtained that uses the light emitted from the light emitting device efficiently.

According to another preferred embodiment of the invention, in the illuminating device built as described above, a diffusive plate is irradiated with light from a plurality of the light emitting modules arrayed in a matrix.

With this construction, each light emitting module emits a large amount of light, and thus the diffusive plate has higher luminance. When the lens is a diffusive lens, even without the light emitting modules being arrayed densely, the diffusive plate has less unevenness in luminance. Moreover, a smaller number of light emitting modules will do, and this helps reduce the cost of the illuminating device.

According to another preferred embodiment of the invention, a display device is built which incorporates the illuminating device built as described above and a display panel receiving light from the illuminating device.

With this construction, a display device is obtained that has less unevenness in illuminance and of which the cost of the illuminating device portion is low.

According to another preferred embodiment of the invention, in the display device built as described above, the display panel is a liquid crystal display panel.

With this structure, a liquid crystal display panel is obtained that has less unevenness in illuminance and of which the cost of the illuminating device portion is low.

According to another preferred embodiment of the invention, a television receiver is built which incorporates the display device built as described above.

With this structure, a television receiver is obtained that has less unevenness in illuminance and of which the cost of the display device portion is low.

### Advantageous Effects of the Invention

According to the present invention, the light reflected at the interface between the lens and the air surrounding it so as to return toward the mounting board is once again reflected on the built-in reflective sheet so as to rejoin the light emerging from the lens. Thus, it is possible, without relying on increasing the amount of light emitted by the light emitting device, to increase the amount of light emerging from the lens and thereby obtain accordingly brighter illumination.

### Brief Description of Drawings

[Fig. 1] is an exploded perspective view of a display device provided with a light emitting module according to a preferred embodiment of the invention;
[Fig. 2] is a partial sectional view of an illuminating device portion of the display device in Fig. 1;
[Fig. 3] is a partial enlarged plan view showing an arrangement of light emitting modules;
[Fig. 4] is a partial enlarged plan view showing portions of mounting boards at which they are connected together;
[Fig. 5] is an exploded perspective view of a television receiver;
[Fig. 6] is an exploded perspective view of a conventional illuminating device;
[Fig. 7] is a graph showing how illuminance varies with the direction of radiation from an LED; and
[Fig. 8] is a diagram conceptually showing the luminance of a plurality of arrayed LEDs.

### Description of Embodiments

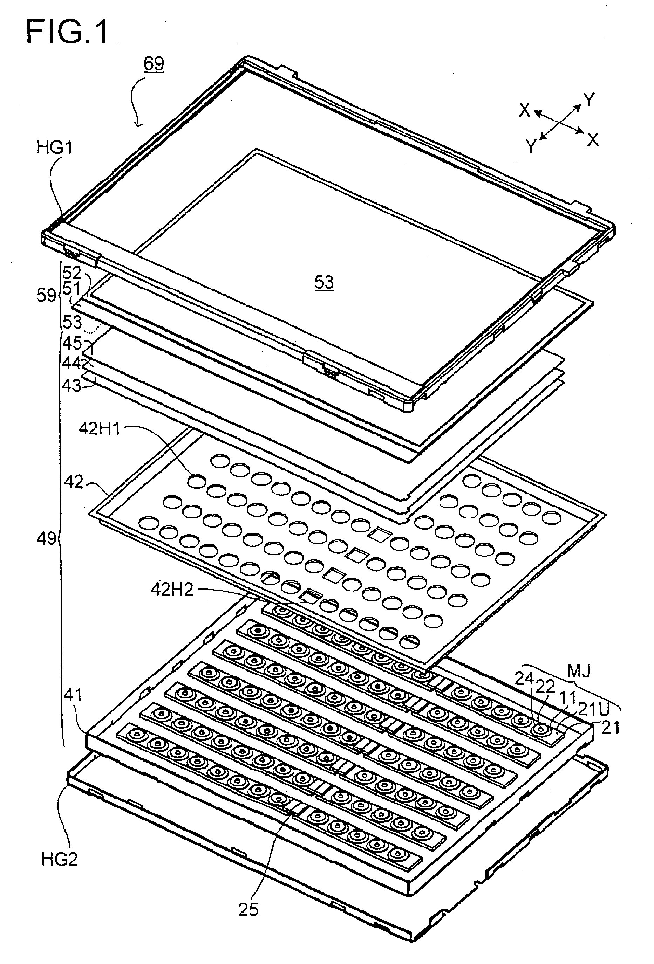

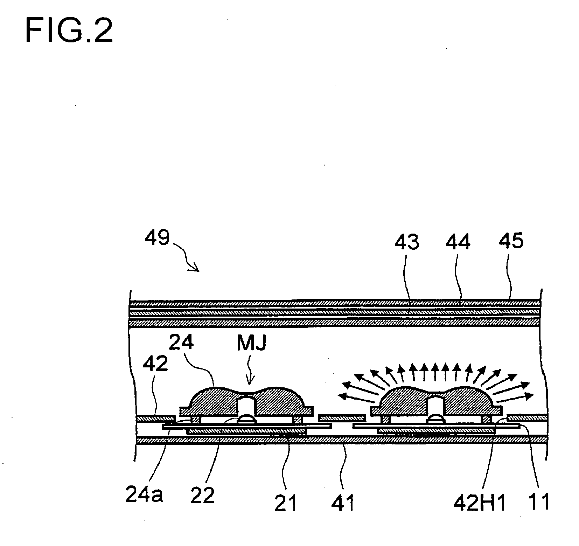

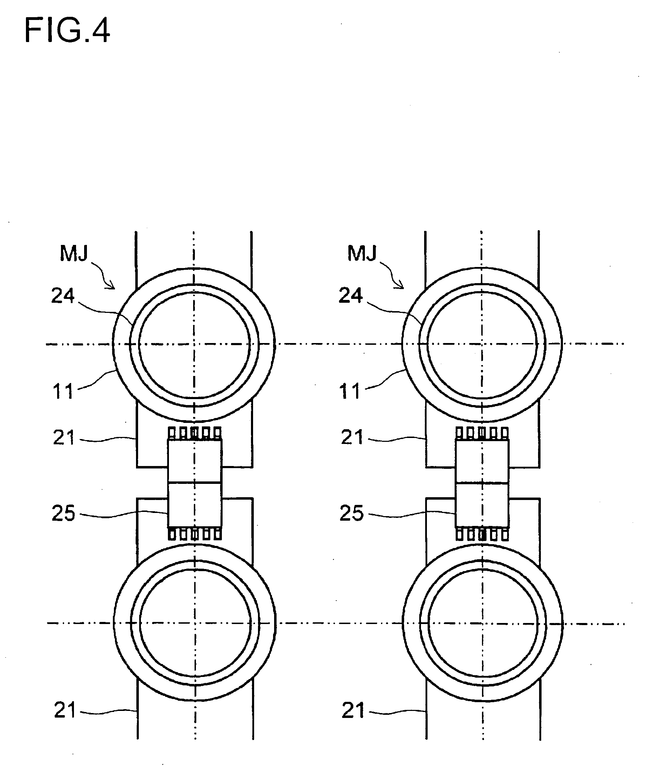

Below, a description will be given of the structure of a display device embodying the invention which is provided with a light emitting module according to a preferred embodiment of the present invention, with reference to Figs. 1 to 4. In Fig. 1, the display device 69 is depicted in a state placed horizontally with its display surface pointing up.

The display device 69 employs a liquid crystal display panel 59 as a display panel. The liquid crystal display panel 59 is, along with a backlight unit 49 which illuminates it from behind, accommodated in a single housing. The housing is composed of a front housing member HG1 and a rear housing member HG2 put together.

The liquid crystal display panel 59 is composed of an active matrix substrate 51, which includes switching devices such as thin-film transistors (TFTs), and a counter substrate 52, which lies opposite the active matrix substrate 51, bonded together with a sealing member (not shown) between them, with liquid crystal filling between the active matrix substrate 51 and the counter substrate 52.

A polarizing film 53 is bonded on the light-input surface of the active matrix substrate 51, and another polarizing film 53 is bonded on the light-output surface of the counter substrate 52. The liquid crystal display panel 59 forms an image by exploiting variation of light transmittance resulting from inclination of liquid crystal molecules.

The backlight unit 49, which is an implementation of an illuminating device according to the present invention, includes a light emitting module MJ, a chassis 41, a large-format reflective sheet 42, a diffusive plate 43, a prism sheet 44, and a microlens sheet 45.

The light emitting module MJ includes a mounting board 21, an LED 22, a diffusive lens 24, and a built-in reflective sheet 11. An LED exemplifies a light emitting device, of which other examples include an organic electroluminescence device and an inorganic electroluminescence device.

Now, the significance of the diffusive lens 24 will be discussed. Consider, for example, the illuminating device disclosed in Patent Document 1. In the illuminating device shown in Fig. 6, LEDs 122 are combined with lenses 124, to be sure, but the spread of the light from individual LEDs 122 is small. Thus, to obtain even luminance, a large number of light emitting modules mj need to be arrayed densely. This leads to increased component and mounting costs, resulting in high overall cost.

The development of LEDs with ever higher luminance in recent years has made it possible to obtain the amount of light sufficient to illuminate an entire screen with a comparatively small number of LEDs. Even with high-luminance LEDs, however, dispersedly arraying them inevitably ends up with uneven luminance. It is therefore preferable to use, in combination with individual LEDs, lenses with high light-diffusing performance (in the present description, such lenses are referred to as "diffusive lenses").

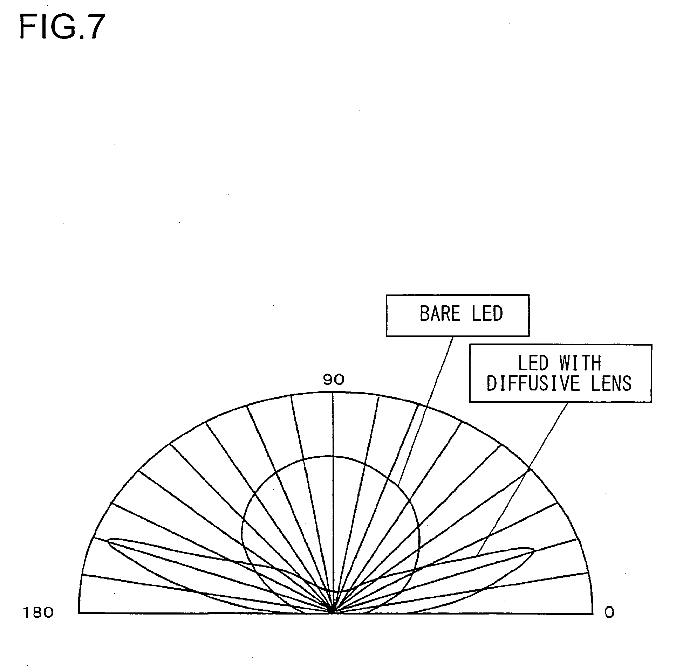

Fig. 7 is a graph showing how illuminance (in lux) varies with the direction of radiation for a bare LED and for an LED fitted with a diffusive lens. With a bare LED, the peak lies at 90°, which is the angle of the optical axis, and the farther apart from there, the illuminance sharply drops. In contrast, with an LED fitted with a diffusive lens, it is possible, while enlarging the range in which a certain degree of illuminance or higher is obtained, to set a peak of illuminance at an angle different from that of the optical axis. Needless to say, the illustrated pattern of illuminance can be varied at will by appropriate design of the diffusive lens.

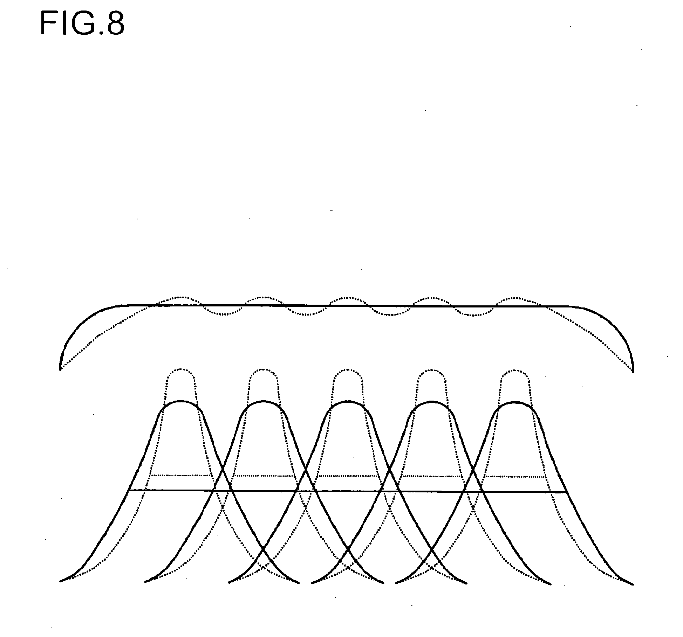

Fig. 8 conceptually shows the overall luminance of a plurality of arrayed LEDs. In the diagram, the waves of solid lines represent the luminance of LEDs fitted with diffusive lenses, and the waves of dotted lines represent the luminance of bare LEDs. A horizontal line in a wave represents the width of the wave at half the peak luminance (the full width at half maximum). With LEDs fitted with diffusive lenses, each wave can be made broader, and thus it is easy to make the overall luminance of arrayed LEDs flat as indicated by a solid line in an upper part of the diagram. With bare LEDs, by contrast, each wave is high but narrow, with a result that the overall luminance of arrayed LEDs inevitably describes waves. To avoid an image with such uneven luminance, there is almost no choice but to adopt LEDs fitted with diffusive lenses.

Out of the above considerations, the light emitting module MJ includes the diffusive lens 24.

The mounting board 21 has the shape of an elongate rectangular, and on its top surface serving as a mounting surface 21 U in the lengthwise direction, a plurality of electrodes (not shown) are formed at predetermined intervals, with the LED 22 mounted on those electrodes. One mounting board 21 is common to a plurality of LEDs 22. That is, as shown in Fig. 1, a plurality of sets of an LED 22, a diffusive lens 24, and a built-in reflective sheet 11 combined together are arranged on each mounting board 21, at predetermined intervals in its lengthwise direction.

The diffusive lens 24 is circular as seen in a plan view, has a plurality of feet 24a at the bottom, and is fitted to the mounting board 21 with the tips of the feet 24a bonded to the mourning surface 21U of the mounting board 21 with adhesive. Owing to the provision of the feet 24a, a gap is secured between the mounting board 21 and the diffusive lens 24. A stream of air passing through the gap cools the LED 22. Provided that sufficient heat rejection is attained, it is possible to use, instead, an integrally-molded light emitting module having an LED embedded in a diffusive lens.

There are many types of LEDs that can be used as the LED 22. For example, it is possible to use an LED of the type in which an LED chip emitting blue light is combined with a phosphor receiving the light from the LED chip and emitting yellow light by fluorescence so that the blue and yellow light emitted from them mix to produce white light. It is also possible to use an LED of the type in which an LED chip emitting blue light is combined with phosphors receiving the light from the LED chip and emitting green and red light, respectively, by fluorescence so that the blue, green, and red light emitted from them mix to produce white light.

It is also possible to use an LED of the type in which LED chips emitting red and blue light, respectively, are combined with a phosphor receiving the blue light from the LED chip emitting blue light and emitting green light by fluorescence so that the blue, green, and red light emitted from them mix to produce white light.

It is also possible to use an LED of the type in which LED chips emitting red, green, and blue light, respectively, are combined together so that the red, green, and blue light emitted from them mix to produce white light.

In Fig. 1, mounting boards 21s having five light emitting modules MJ arranged on each of them and mounting boards 21 having eight light emitting modules MJ arranged on each of them are used in combination. A mounting board 21 having five light emitting modules MJ and a mounting board 21 having eight light emitting modules MJ are coupled together by connecting together connectors 25 attached respectively to the adjacent edges of those mounting boards 21 in their lengthwise direction (needless to say, of the connectors 25, one is male and the other is female).

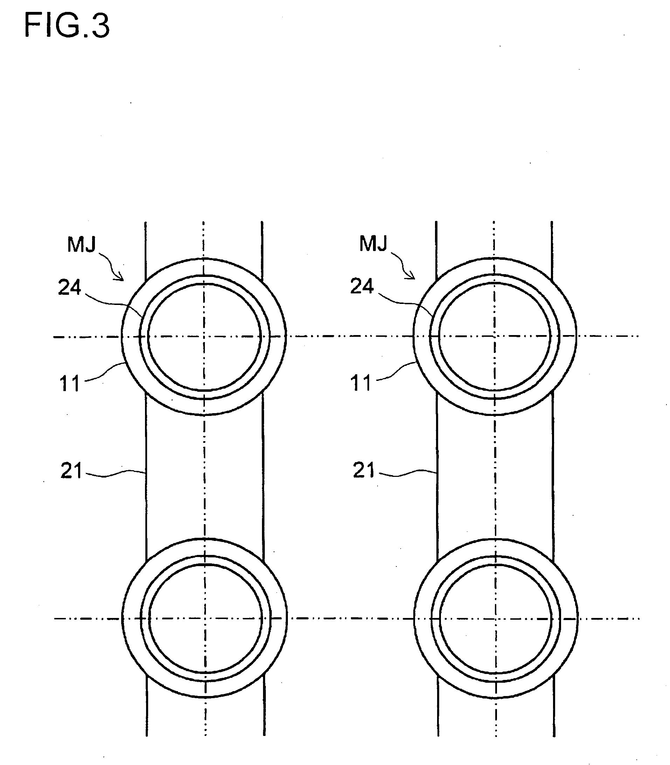

A plurality of sets of a mounting board 21 having five light emitting modules MJ and a mounting board 21 having eight light emitting modules MJ combined together are arranged parallel to one another on the chassis 41. The direction in which the light emitting modules MJ are arranged on each mounting board 21 is the lengthwise direction of the chassis 41, that is, the direction indicated by arrows X. The direction in which the sets of two mounting boards 21s combined together are arranged is the widthwise direction of the chassis 41, that is, the direction indicated by arrows Y. Thus, the light emitting modules MJ are arranged in a matrix. In Fig. 3, meshes in the grid of the matrix are indicated by dash-dot-dot lines. Although, in Fig. 3, the meshes of the grid are square, they may instead be rectangular. The mounting boards 21 are fixed to the chassis 41 by any suitable means, such as swaging, bonding, screw-fastening, rivet-fastening, etc.

Between the mounting board 21 and the diffusive lens 24, the built-in reflective sheet 11 is arranged. The built-in reflective sheet 11 is fixed on the mounting surface 21 U, at a position where the built-in reflective sheet 11 faces the bottom of the diffusive lens 24. The built-in reflective sheet 11 has higher light reflectance than the mounting board 21. The built-in reflective sheet 11 too is circular as seen in a plan view, and is concentric with the diffusive lens 24, the built-in reflective sheet 11 having a larger diameter.

The built-in reflective sheet 11 is a sheet of foamed resin having a large number of fine bubbles contained in it, and purposefully exploits reflection at the bubble interface to reflect light, offering high light reflectance. Among such sheets available, some, made of polyethylene terephthalate (PET), provide a reflectance of 98% or more, and it is preferable to use one of these. In the built-in reflective sheet 11, through holes are formed through which the feet 24a of the diffusive lens 24 are put.

Over the chassis 41, the reflective sheet 42 is laid which has, as seen in a plan view, a shape geometrically similar to that of the chassis 41. The reflective sheet 42 is a sheet of foamed resin like the built-in reflective sheet 11. In the reflective sheet 42, at positions corresponding to the light emitting modules MJ, circular clearance openings 42H1 are formed, which are so sized that the diffusive lenses 24 can pass through them but the built-in reflective sheets 11 do not. Also in the reflective sheet 42, at positions corresponding to the connectors 25, rectangular clearance openings 42H2 are formed through which the connectors 25 are put.

When the light emitting modules MJ are lit, light emits from the LEDs 22. The light is directed in a predetermined direction by the diffusive lenses 24. As a result of a number of light emitting modules MJ emitting light simultaneously, the diffusive plate 43 is almost evenly irradiated with light, achieving illumination with little unevenness in luminance.

Most of the light emitted from the LEDs 22, though its direction is changed, emerges, as it is, from the diffusive lenses 24. Part of the light, however, is reflected at the interface between the diffusive lenses 24 and the air surrounding them so as to return toward the mounting boards 21s. Considering that the returning light eventually strikes the mounting boards 21s, even if these are designed to have increased reflectance as by application of white resist to their surface, they are not expected to provide so high reflectance. In the present invention, however, the arrangement of the built-in reflective sheets 11 having higher reflectance than the mounting boards 21s permits the returning light to be once again reflected effectively so as to rejoin the light emerging from the diffusive lenses 24. This increases the amount of light emerging from the diffusive lenses 24.

The built-in reflective sheets 11, owing to being formed of a sheet of foamed resin that reflects light by bubble interface reflection inside them, meet the preferable requirement of the built-in reflective sheets 11, namely a reflectance of 95% or more, and can even offer a reflectance as high as 98%. Moreover, unlike paint and the like, less likelihood of deterioration with time helps maintain high reflectance for a long period.

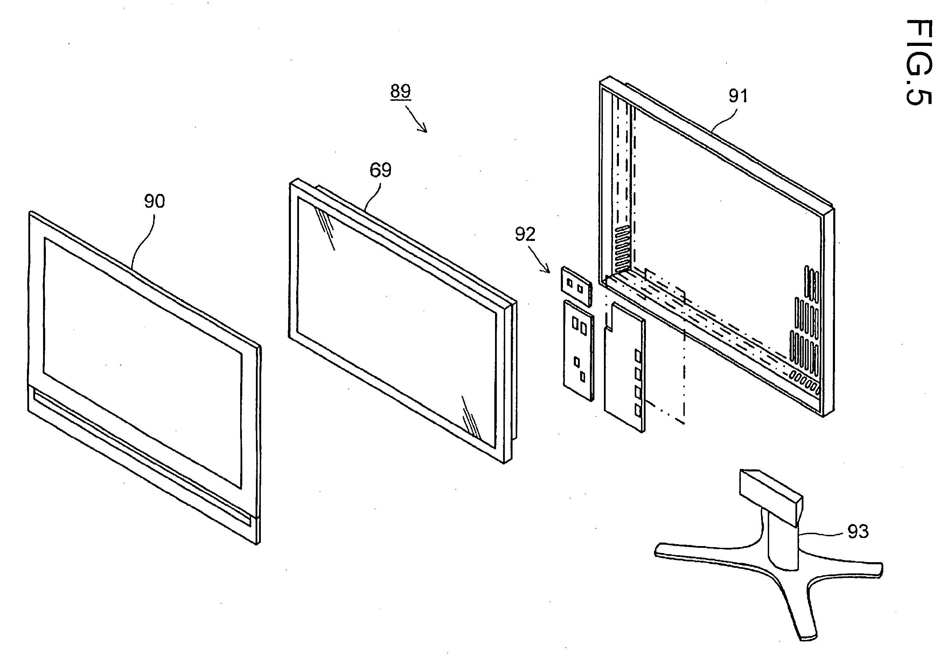

Fig. 5 shows an example of the construction of a television receiver incorporating the display device 69. The television receiver 89 has the display device 69 and a set of control boards 92 accommodated in a cabinet composed of a front cabinet 90 and a rear cabinet 91, the cabinet being supported on a stand 93.

While the present invention has been described above by way of a preferred embodiment, the embodiment is in no way meant to limit the scope of the invention; the invention may be carried out with many modifications made without departing from the spirit of the invention. For example, although the embodiment presented above deals with a case where light emitting devices are combined with diffusive lenses, instead of diffusive lenses, ordinary lenses may be used to obtain the benefits of the invention.

### Industrial Applicability

The present invention finds wide application in light emitting modules that include light emitting devices and lenses covering them, and in illuminating devices that make use of light from such a light emitting module. The present invention also finds applications in display devices that include such an illuminating device, and in television receivers that are provided with such a display device.

### List of Reference Signs

- 49: backlight unit
- 41: chassis
- 42: reflective sheet
- 43: diffusive plate
- MJ: light emitting module
- 11: built-in reflective sheet
- 21: mounting board
- 22: LED
- 24: diffusive lens
- 59: liquid crystal display panel
- 69: display device
- 89: television receiver

## Claims

1. A light emitting module **characterized in that**
the light emitting module includes a mounting board, a light emitting device mounted on the mounting board, and a lens covering the light emitting device, and
between the mounting board and the lens, a built-in reflective sheet is arranged which has higher light reflectance than the mounting board.

2. The light emitting module according to claim 1, further **characterized in that**
the built-in reflective sheet has a reflectance of 95% or more.

3. The light emitting module according to claim 1, further **characterized in that**
the built-in reflective sheet is formed of a sheet of foamed resin that reflects light by bubble interface reflection inside the resin.

4. The light emitting module according to claim 1, further **characterized in that**
the lens is a diffusive lens.

5. The light emitting module according to claim 1, further **characterized in that**
the light emitting device is an LED.

6. An illuminating device **characterized in that**
the illuminating device uses light from the light emitting module according to any one of claims 1 to 5.

7. The illuminating device according to claim 6, further **characterized in that**
a diffusive plate is irradiated with light from a plurality of the light emitting modules arrayed in a matrix.

8. A display device **characterized in that**
the display device includes the illuminating device according to claim 7 and a display panel receiving light from the illuminating device.

9. The display device according to claim 8, further **characterized in that**
the display panel is a liquid crystal display panel.

10. A television receiver **characterized in that**
the television receiver includes the display device according to claim 8.
